# FASCICULE DE BREVET EUROPEEN

(11) **EP 3 321 235 B1**
(45) Date de publication et mention de la délivrance du brevet: **04.01.2023**
(21) Numéro de dépôt: 17201647.9
(22) Date de dépôt: 14.11.2017
(51) Int. Cl.: C02F 1/68, F16K 15/06, F16K 15/04

(54) **CARTOUCHE D'INJECTION EN PARTICULIER POUR UN APPAREILLAGE DE TRAITEMENT**
INJEKTIONSPATRONE INSBESONDERE FÜR BEHANDLUNGSGERÄT
INJECTION CARTRIDGE, IN PARTICULAR FOR A TREATMENT APPARATUS

(30) Priorité: 14.11.2016 FR 1660950
(43) Date de publication de la demande: 16.05.2018
(73) Titulaire: Pool Technologie, 34130 Valergues (FR)
(72) Inventeur: GRARD, Philippe, 34130 MAUGUIO (FR)
(74) Mandataire: Rhein, Alain

(56) Documents cités:
- DE-A1-102010 004 778
- US-A- 2 828 763
- US-A- 5 979 478

## Description

La présente invention concerne le domaine du contrôle et du traitement de l'eau, en particulier dans un réseau de canalisations. L'invention concerne plus particulièrement les dispositifs permettant d'injecter un liquide, en particulier de l'acide, dans l'eau à traiter. L'invention concerne en outre des appareillages de traitements de liquide comprenant de tels dispositifs associés à une source.

Ces dispositifs et appareillages peuvent être utilisés dans des systèmes de traitement par exemple par électrolyse, en particulier pour des eaux d'irrigation, de piscine, de pataugeoire ou d'aquarium.

Dans ce domaine, les opérateurs utilisent des dispositifs de raccordement disposés entre une source d'un liquide correcteur et une canalisation d'eau. Ces dispositifs sont associés à une valve indépendante apposée entre les dispositifs de raccordement pour éviter un reflux d'eau vers la source de liquide correcteur.

En utilisation, la valve est usée par le contact avec le liquide correcteur, ce qui entraine des reflux d'eau vers la source, ou des fuites. En outre, la valve est enfouie dans le dispositif de raccordement ce qui la rend difficile d'accès, de sorte que la majorité des utilisateurs ne la changent pas en raison des difficultés de l'opération de maintenance. Le non remplacement de la valve peut entrainer à terme l'obligation de remplacer l'ensemble du dispositif et non uniquement la pièce d'usure (valve). Lorsqu'un opérateur souhaite changer la valve, il doit insérer un outil fin tel qu'un tournevis dans le dispositif de raccordement et enlever la valve par effet de levier. Il en résulte généralement des projections de liquide correcteur sur les doigts et potentiellement dans les yeux.

Il est par ailleurs connu par le document US 5 979 478 une installation de traitement d'eau comportant des moyens de pompage pour acheminer l'eau en provenance d'une source quelconque vers un réservoir de stockage, cette eau étant additionnée très tôt en amont de la conduite de pompage d'un produit de traitement contre les moules zébrées.

Plus particulièrement, dans cette partie amont de cette conduite, celle-ci reçoit un embout d'aspiration à l'intérieur duquel s'étend un dispositif d'injection à valve intégrant un clapet anti-reflux à bille.

Ce dispositif est raccordé au travers d'une canule à un réservoir de produit de traitement, cette canule s'étendant en partie axialement dans le conduit de pompage.

Le clapet à bille est intégré dans ce dispositif entre un embout diffuseur recevant, à son extrémité, un embout de fermeture traversé par un alésage en communication avec la canule. Cet embout de fermeture définit le siège à la bille repoussée contre ce dernier par ressort.

Il est également connu par le document DE102010004778A1 un clapet pour le contrôle de l'écoulement d'un fluide, en particulier une soupape de décharge d'huile. Ce clapet comporte manchon apte à être monté dans une ouverture et dont une extrémité forme un siège sur lequel est prend appui, en position de fermeture, le clapet proprement dit. Celui-ci porte des languettes d'accrochage lui permettant d'être monté mobile axialement et par clipage dans le manchon.

Un premier objectif de l'invention est de proposer un dispositif permettant d'injecter un liquide correcteur, dont la maintenance est facilitée et implique moins de danger que dans l'art antérieur.

Un deuxième objectif de l'invention est de proposer un dispositif facile et rapide à démonter et remonter notamment pour effectuer une maintenance tel qu'un changement de valve, et dont le démontage est sécurisé.

Pour atteindre ces objectifs, l'invention propose une cartouche d'injection configurée pour être disposée en aval d'une source comprenant un premier liquide, et pour déboucher dans un deuxième liquide, la cartouche comprenant ;
- un moyen anti-reflux configuré pour bloquer un déplacement de liquide vers la source ;
- au moins une structure de maintien configurée pour maintenir le moyen anti-reflux ;
- ladite au moins une structure de maintien comprenant des moyens d'attache pour fixer le moyen anti-reflux ;
- et la cartouche formant un ensemble amovible ;
caractérisé en ce qu'elle comprend deux structures de maintien qui comprennent des moyens d'attache par clipsage et/ou par baïonnette configurés pour fixer lesdites structures de maintien l'une sur l'autre de part et d'autre du moyen anti-reflux.

En particulier, la cartouche est configurée pour être coulissée entre des structures de montage formant un dispositif de raccordement.

Avantageusement, la cartouche peut être facilement insérée dans ou retirée d'un dispositif de raccordement, par exemple par coulissement. L'utilisateur ne manipule pas directement la valve recouverte de liquide correcteur, ce qui est moins dangereux pour l'utilisateur.

En particulier, la cartouche comprend deux structures de maintien qui comprennent les moyens d'attache configurés pour fixer lesdites structures de maintien l'une sur l'autre de part et d'autre du moyen anti-reflux. De préférence, les moyens d'attache sont des moyens d'attache par clipsage et/ou par baïonnette.

Avantageusement, la cartouche d'injection comprend un ensemble de pièces solidarisées incluant le moyen anti-reflux, dont la maintenance est facilitée car il suffit de retirer la cartouche et la remplacer par une cartouche neuve.

Selon d'autres aspects pris isolément ou combinés selon toutes les combinaisons techniquement réalisables :
- les moyens d'attache par clipsage et/ou par baïonnette comprennent au moins un doigt sur une structure de maintien et au moins une extrémité de réception sur l'autre structure de maintien ; et/ou
- les deux structures de maintien comprennent un premier mécanisme de détrompage par coopération de forme ; et/ou
- le mécanisme de détrompage comprend au moins une rainure sur une structure de maintien coopérant avec un relief correspondant de l'autre structure de maintien ; et/ou
- les deux structures de maintien comprennent une structure de maintien amont et une structure de maintien aval, et la structure de maintien aval comprend un fond axial et au moins une ouverture latérale ; et/ou
- la cartouche comprend un diffuseur pouvant baigner dans le deuxième liquide, le diffuseur comprenant un fond axial et au moins une ouverture latérale.
- ladite ouverture latérale représente 40 à 60% de la surface latérale de la structure de maintien aval ; et/ou
- le moyen anti-reflux comprend au moins une valve anti-reflux ou au moins un élément d'obturation associé à un moyen de rappel ; et/ou
- les structures de maintien sont logées dans deux structures de montage vissables l'une sur l'autre ; et/ou
- la structure de maintien amont comprend une embouchure conique ou tronconique sur laquelle un tuyau peut être connecté, de sorte que le vissage des structures de montage entraine le serrage du tuyau sur l'embouchure conique ou tronconique.
- les au moins une des structures de montage comprennent un deuxième mécanisme de détrompage par coopération de forme.

Un autre aspect de l'invention concerne la forme du diffuseur formant structure de maintien aval tel que décrit ci-dessus. Avantageusement, cette forme permet un écoulement du premier liquide dans le deuxième liquide en perturbant très peu le flux du deuxième liquide ou un éventuel capteur disposé au voisinage du diffuseur.

L'invention porte également sur un appareillage de traitement de liquide comprenant une cellule de traitement, caractérisé en ce qu'il comprend en outre une cartouche d'injection selon l'invention associée à une source de liquide à injecter, en particulier en amont de la cellule de traitement.

L'invention sera davantage détaillée par la description de modes de réalisation non limitatifs, et sur la base des figures annexées, dans lesquelles :

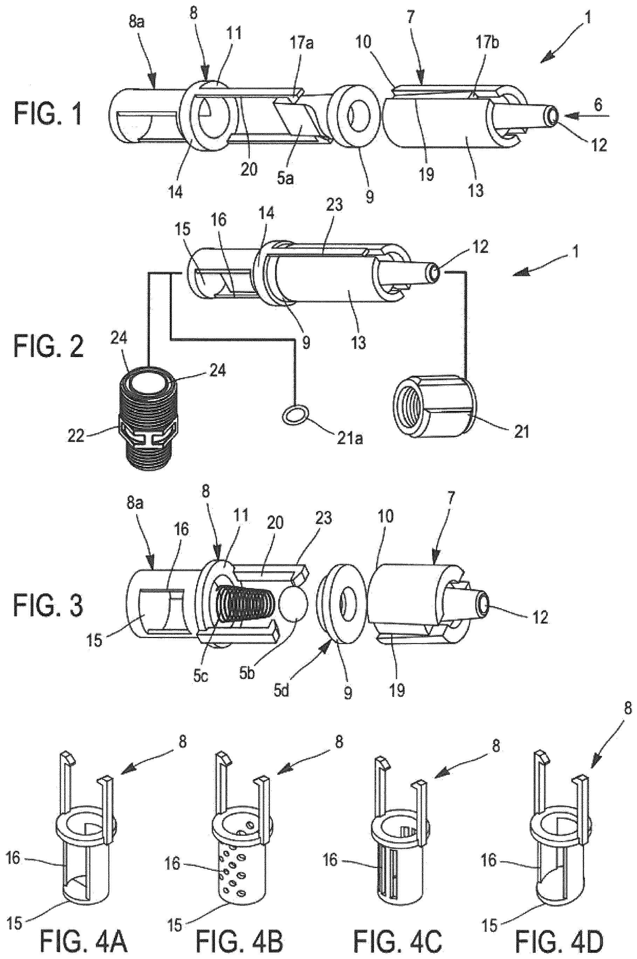

- la figure 1 est une vue éclatée des éléments principaux de la cartouche selon un premier mode de réalisation préféré ;
- la figure 2 est une vue similaire à la figure 1 où lesdits éléments sont assemblés, et illustrant en outre les structures de montage ;
- la figure 3 est une vue éclatée des éléments principaux de la cartouche selon un deuxième mode de réalisation préféré ;
- les figures 4A à 4D illustrent des variantes de diffuseurs de la cartouche ;

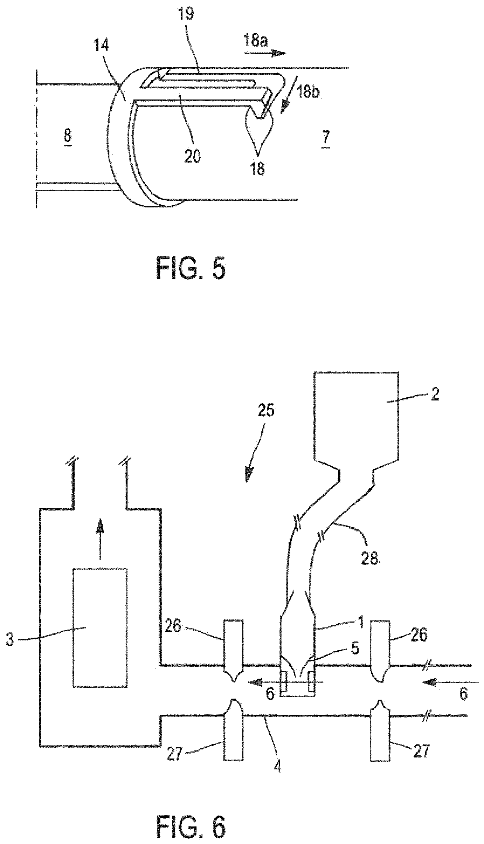

- la figure 5 est une vue dans l'espace d'une variante à fixation par baïonnette ; et
- la figure 6 est un schéma d'un appareillage selon l'invention.

L'invention porte sur une cartouche d'injection 1 en particulier pour le contrôle et le traitement de l'eau. La cartouche d'injection 1 est associée à une source 2 d'un premier liquide, pouvant être un correcteur de pH tel que par exemple de l'acide. La cartouche 1 est configurée pour être disposée en aval de la source 2.

La cartouche d'injection 1 est configurée pour permettre l'écoulement, et en particulier la diffusion, du premier liquide de la source 2 vers un deuxième liquide. En particulier, le deuxième liquide est de l'eau, plus particulièrement de l'eau en amont d'une cellule de traitement 3 telle qu'une cellule d'électrolyse, par exemple pour piscine, pataugeoire ou aquarium. L'invention peut aussi être appliquée au traitement des eaux d'irrigation.

La cartouche 1 est configurée pour déboucher dans le deuxième liquide. En particulier, la cartouche est configurée pour déboucher dans une canalisation 4 de sorte qu'une extrémité de la cartouche 1 peut baigner dans le deuxième liquide dans la canalisation 4. Ainsi, le premier liquide peut s'écouler dans la canalisation 4 en partant de la source 2 en passant par la cartouche 1.

La cartouche d'injection 1 est configurée pour empêcher l'écoulement du deuxième liquide vers la source 2. Pour ce faire, la cartouche d'injection 1 comprend un moyen anti-reflux 5 configuré pour bloquer un déplacement de liquide vers la source 2.

Selon une variante, le moyen anti-reflux comprend au moins une valve anti-reflux 5a. Ce type de valve comprend généralement au moins deux lèvres obliques radialement et axialement dans le sens désiré du flux. De préférence, la valve 5a comprend deux lèvres. Ce type de valve peut comprendre un matériau flexible tel qu'un polymère naturel ou artificiel. De préférence, la valve 5a est en caoutchouc.

Selon une variante, le moyen anti-reflux 5 comprend au moins un élément d'obturation 5b associé à un moyen de rappel 5c. L'élément d'obturation 5b est entrainé axialement vers une position d'obturation par le moyen de rappel 5c dans un sens contraire à un flux désiré 6, en particulier de la source 2 vers le deuxième liquide. Ainsi, le flux que l'on souhaite bloquer coopère avec le moyen de rappel 5c de sorte que l'élément d'obturation 5b ferme la cartouche. Pour ce faire un collet d'obturation 5d peut être prévu avec une taille correspondant à l'élément d'obturation. Le collet d'obturation 5d joue un rôle de joint. Au contraire, le flux désiré 6 est en opposition avec le moyen de rappel 5c de sorte à ouvrir la cartouche 1. Ainsi, le flux désiré 6 et la force du moyen de rappel 5c sont sélectionnés de sorte que le flux désiré 6 surmonte la force du moyen de rappel 5c dans les périodes d'injection.

De préférence, l'élément d'obturation 5b est une bille. On peut prévoir une pastille pouvant être prismatique par exemple cylindrique. Le moyen de rappel 5c comprend de préférence un ressort, par exemple un ressort cylindrique.

En outre, le moyen anti-reflux 5 est maintenu dans la cartouche 1 de sorte à ne pas être entrainé axialement par un flux. Ainsi, la cartouche d'injection 1 comprend deux structures de maintien 7, 8 configurées pour maintenir le moyen anti-reflux 5.

De préférence, une partie du moyen anti-reflux 5, en particulier les lèvres de la valve 5a, ou l'élément d'obturation 5b, est configuré pour pénétrer une seule (8) des deux structures de maintien lors du montage de la cartouche 1. Ainsi, il n'est pas possible de monter la cartouche 1 en inversant l'orientation du moyen anti-reflux 5.

Le moyen anti-reflux 5 est configuré pour être disposé entre les deux structures de maintien 7, 8. En particulier, le moyen anti-reflux 5 comprend au moins un rebord latéral ou périphérique 9 sur lequel les structures de maintien 7, 8 exercent une pression pour maintenir axialement le moyen anti-reflux 5. Pour ce faire, les structures de maintien 7, 8 peuvent également comprendre au moins un rebord latéral ou périphérique correspondant 10, 11. Les rebords périphériques 9, 10, 11 sont préférés comme illustré dans les figures.

Un élément « latéral » tel qu'un rebord latéral, peut s'entendre comme une projection radiale telle qu'un élément prismatique par exemple parallélépipédique ou cubique, en référence à un axe longitudinal. Un élément « périphérique » tel qu'un rebord périphérique, peut s'entendre comme une projection circulaire telle qu'un élément de cylindre, en référence à un axe longitudinal.

Selon une variante, les deux structures de maintien 7, 8 comprennent une structure de maintien amont 7, en particulier plus proche de la source 2, et une structure de maintien aval 8, en particulier plus éloignée de la source 2.

La structure de maintien amont 7 comprend de préférence une première embouchure 12 configurée pour être connectée à la source 2. De préférence, la structure de maintien amont 7 comprend en outre un premier contour lisse 13 sensiblement cylindrique par exemple sur toute sa longueur dans le sens axial. En particulier, l'embouchure 12 comprend un diamètre externe variable, plus particulièrement une forme conique, et un tuyau peut y être connecté. Une forme tronconique peut aussi être envisagée. De préférence, le tuyau y est fixé par une structure de type écrou détaillée plus bas.

La structure de maintien aval 8 comprend de préférence une deuxième embouchure configurée pour être dans le deuxième liquide. Ainsi, la structure de maintien aval 8 fait office de diffuseur du premier liquide dans le deuxième liquide.

En outre, la structure de maintien aval 8 comprend de préférence un deuxième contour lisse 14 sensiblement cylindrique sur une partie de sa longueur dans le sens axial. La structure aval comprend de préférence un fond axial 15 et une ouverture latérale 16 détaillés plus bas.

Selon un aspect de l'invention, les deux structures de maintien 7, 8 comprennent des moyens d'attache de préférence par clipsage 17 et/ou par baïonnette 18 configurés pour fixer lesdites structures de maintien 7, 8 l'une sur l'autre de part et d'autre du moyen anti-reflux 5. En particulier, chaque structure de maintien 7, 8 comprend au moins un moyen d'attache par clipsage 17 et/ou par baïonnette 18 coopérant avec un moyen d'attache correspondant de l'autre structure de maintien.

Avantageusement, la cartouche d'injection 1 comprend une structure simplifiée et un nombre de pièces diminué servant à la fixation du moyen anti-reflux 5. Les moyens d'attache par clipsage sont préférés car ils sont plus faciles à fabriquer et rapides à démonter.

Par « moyens d'attache par clipsage » est entendu un mécanisme d'attache comprenant une structure mâle 17a s'emboîtant dans une structure femelle 17b suite à une déformation élastique de la structure mâle et/ou de la structure femelle ou suite à une déformation élastique d'au moins une pièce solidaire de la structure mâle et/ou de la structure femelle. La même déformation élastique est généralement nécessaire pour le détachage. Les termes « clipsage, encliquetage et clippage » doivent être considérés comme des synonymes.

Par « moyens d'attache par baïonnette » est entendu un mécanisme d'attache comprenant une structure mâle 17a s'emboîtant dans une structure femelle suite à un couplage par enfoncement axial 18a suivant un axe commun aux structures, puis une rotation 18b de moins d'un tour.

Par « moyens d'attache par clipsage et baïonnette » est entendu un mécanisme de moyens d'attache par baïonnette dans lequel en fin de rotation 18b les structures mâle et femelle coopèrent ensemble par clipsage.

Selon une variante, les moyens d'attache par clipsage et/ou par baïonnette comprennent au moins un doigt 17a sur une structure de maintien et au moins une extrémité de réception 17b sur l'autre structure de maintien. Au moins un doigt de clipsage et/ou de baïonnette peut être prévu sur la structure de maintien amont et au moins une extrémité de réception correspondante peut être prévue sur la structure de maintien aval. De préférence, ledit doigt 17a de clipsage et/ou de baïonnette est prévu sur la structure de maintien aval 8 et ladite extrémité de réception 17b correspondante est prévue sur la structure de maintien amont 7. Cette dernière configuration permet d'utiliser la périphérie de la structure aval 8 par exemple pour réaliser ladite ouverture périphérique 16. Ledit au moins un doigt 17a est de préférence rectiligne, et se termine par une protubérance de clipsage, par exemple orientée vers l'axe principal de la structure de maintien aval 8. De préférence, les moyens d'attache comprennent deux doigts 17a.

Selon une variante, les deux structures de maintien 7, 8 comprennent un premier mécanisme de détrompage 19, 20 par coopération de forme. En particulier, le premier mécanisme de détrompage comprend des reliefs de guidage sur les structures de maintien 7, 8. De préférence, le mécanisme de détrompage comprend au moins une rainure 19 sur une structure de maintien coopérant avec un relief 20 correspondant de l'autre structure de maintien. Par exemple, une rainure de guidage 19 est prévue sur la structure de maintien amont 7 pour guider un bras 20 portant ledit doigt 17a de la structure de maintien aval 8. La rainure de guidage 19 peut comprendre une légère pente ascendante s'éloignant de l'axe principal de la structure de maintien amont en référence à un sens de clipsage. Le mécanisme de détrompage comprend de préférence des éléments en continuité avec les moyens d'attache par clipsage. Des éléments indépendants peuvent être prévus, par exemple des doigts et rainures séparés desdits moyens d'attache.

De préférence, la structure de maintien aval 8 comprend des doigts 17a diamétralement opposés étant chacun porté par un bras 20 correspondant. Avantageusement, les bras 20 diamétralement opposés permettent de maintenir radialement le moyen anti-reflux 5 et d'aligner axialement les structures de maintien 7, 8 et le moyen anti-reflux 5.

Une fois les structures de maintien assemblées l'une sur l'autre, elles peuvent être coulissées entre deux structures de montage 21, 22 formant un dispositif de raccordement. Avantageusement, la cartouche ainsi formée est facilement insérable et retirable du dispositif de raccordement. En outre, cet agencement permet d'avoir une cartouche insérable dans des raccords et retirable rapidement sans contact significatif entre les doigts et la valve. Cela diminue significativement les couts de maintenance d'un tel raccord d'injection.

La structure de maintien aval 8 comprend de préférence un fond axial 15 et au moins une ouverture latérale 16. Ainsi, le premier liquide s'écoule latéralement dans la structure de maintien aval 8 par ladite ouverture latérale 16. L'ouverture latérale 16 est une forme particulière sur une partie latérale de la structure de maintien aval 8. Elle peut être une face de révolution entière ou une partie de celle-ci, par exemple de forme carrée, rectangulaire, triangulaire, trapézoïde, circulaire, ovoïde.

De préférence, ladite ouverture latérale représente 40 à 60% de la surface latérale de la structure de maintien aval 8.

Selon une variante davantage préférée, la structure de maintien aval 8 comprend des ouvertures latérales 16 diamétralement opposées. Cette configuration facilite le transport du premier liquide, en particulier l'acide, par le deuxième liquide, en particulier l'eau de la canalisation 4. Les ouvertures latérales 16 alignées peuvent être adaptées pour réaliser une forme de venturi en particulier dans le sens de circulation de la canalisation 4.

Ainsi, un autre aspect de l'invention concerne la forme du diffuseur formant ici une structure de maintien aval 8 tel que décrit ci-dessus. Cet aspect a trait à un dispositif d'injection comprenant un diffuseur 8a qui comprend un fond axial 15 et au moins une ouverture latérale 16. On peut envisager, notamment dans le cadre de cet aspect, que le diffuseur soit une pièce indépendante de la structure de maintien aval 8 en tant que telle.

Avantageusement, cette forme permet un écoulement du premier liquide dans le deuxième liquide en perturbant très peu le flux du deuxième liquide ou en perturbant très peu un éventuel capteur disposé au voisinage du diffuseur, sensiblement en face du fond axial 15.

En particulier, le diffuseur 8a peut avoir une forme globalement cylindrique ou prismatique avec un fond axial au niveau de la base côté aval, et une ouverture latérale sur au moins une partie d'une face de révolution.

Le fond axial 15 peut être oblique par rapport à l'axe principal du diffuseur 8a.

Une fois le moyen anti-reflux 5 et les structures de maintien 7, 8 assemblés, il importe de les raccorder à la source 2 et à un contenant du deuxième liquide. Pour ce faire sont prévues les deux structures de montage 21, 22 qui, selon une variante, sont vissables l'une sur l'autre. En particulier, les structures de montage sont connectées à la source 2 et au le contenant du deuxième liquide, plus particulièrement sur une canalisation 4. La structure de montage amont 21 a en particulier une forme d'écrou et la structure de montage aval 22 a un filetage coopérant avec l'écrou et un deuxième filetage prévu par exemple pour le montage sur la canalisation 2. Ainsi, la structure de montage aval 22 est par exemple un raccord mâle/mâle. Plus particulièrement, le vissage de la structure de montage amont 21 sur la structure de montage aval 22 permet de fixer le tuyau d'arrivée de liquide correcteur par exemple au moyen d'un joint interne à l'écrou. De préférence, les structures de montage sont des dispositifs séparés des structures de maintien 7, 8, et les structures de maintien 7, 8 sont logées dans lesdites structures de montage 21, 22. Au moins un joint 21a peut être prévu pour éviter les fuites.

L'étanchéité entre le tuyau 28 et l'embouchure 12 réalisée d'une part par la forme conique de l'embouchure 12 et d'autre part par le vissage de l'écrou 21. En particulier, la partie conique recouverte du tuyau 28 pénètre l'écrou 21 et le vissage de l'écrou 21 serre le tuyau 28 sur l'embouchure 12 conique.

De préférence, au moins une structure de montage 21, 22 a une taille standard de sorte à être adaptable sur les canalisations usuelles.

De préférence, les contours lisses 13, 14 des structures de maintien 7, 8 coopèrent par contact avec les surfaces internes des structures de montage 21, 22.

Selon une variante, les deux structures de montage 21, 22 comprennent un deuxième mécanisme de détrompage 23, 24 par coopération de forme, en particulier pour l'insertion des structures de maintien 7, 8. L'insertion peut se faire axialement. Le deuxième mécanisme de détrompage peut comprendre un ou plusieurs aspects du premier mécanisme de détrompage mentionné ci-dessus. En particulier, de même que précédemment, le deuxième mécanisme de détrompage comprend des reliefs de guidage 23, 24 respectivement sur une structure de maintien et une structure de montage correspondante. Par exemple, au moins une deuxième rainure de guidage 24, de préférence deux rainures, sont prévues intérieurement sur une structure de montage (22) pour guider une partie 23 du doigt de la structure de maintien aval 8.

L'invention porte en outre sur un appareillage de traitement de liquide 25 comprenant de préférence une cellule de traitement 3, ainsi qu'une cartouche d'injection 1 telle que décrite précédemment.

En particulier, ce type d'appareillage 25 comprend une cellule de traitement 3 tel qu'une cellule d'électrolyse pouvant être reliée à une canalisation 4 comprenant le liquide à traiter. Il peut être requis d'injecter un liquide, tel que de l'acide, provenant d'une source 2 dans la canalisation 4 comprenant par exemple de l'eau. L'acide permet de corriger le pH dans la canalisation. L'appareillage 25 permet d'appliquer une consigne de pH à injecter et la vérifier au moyen de capteurs de pH de l'appareillage 25.

La canalisation 4 peut comprendre des dispositifs de mesure 26 tels qu'un pH-mètre ou d'autres dispositifs d'injection 27 s'étendant dans la canalisation au voisinage de l'embouchure de la cartouche d'injection. Avantageusement, la cartouche d'injection 1 selon une variante préférée comprend un diffuseur 8 perturbant très peu le flux d'eau ce qui améliore considérablement l'utilisation de l'appareillage car le fonctionnement des dispositifs 26, 27 de la canalisation au voisinage de la cartouche 1 est peu perturbé par l'injection. C'est en particulier le cas des dispositifs 27 situés sensiblement en face du fond axial 15.

Le raccordement peut être fait par un porte instrument(s) ou une enceinte de cellule de traitement qui comprend une structure porteuse oblique par rapport à une normale à l'axe de la canalisation. En particulier, la structure porteuse peut être inclinée d'un angle, de préférence supérieur ou égal à 10 degrés, et de préférence inférieur à 90 degrés, en particulier d'un angle compris entre 15 et 25 degrés, plus particulièrement de 15 degrés. Cet aspect permet de limiter davantage la gêne des autres dispositifs 26, 27.

L'invention porte en outre sur un procédé amélioré de montage d'une cartouche d'injection, en particulier une cartouche d'injection 1 telle que décrite précédemment. Le procédé comprend des étapes de :
- disposer un moyen anti-reflux 5 entre deux structures de maintien 7, 8,
- fixer les deux structures de maintien 7, 8 de part et d'autre du moyen anti-reflux 5 par clipsage ou par baïonnette,
- de préférence, insérer les structures de maintien 7, 8 dans des structures de montage 21, 22, et
- de préférence, fixer les structures de montage 21, 22 sur une source 2 et sur un contenant 4.

Un tuyau 28, connecté à la source 2, peut être connecté à l'embouchure 12 avant la fixation de la structure de montage amont 21 de sorte à fixer le tuyau 28.

Avantageusement, la cartouche d'injection 1 ainsi montée comprend une structure simplifiée et un nombre de pièces diminué par rapport aux systèmes connus. En outre, la cartouche peut être facilement retirée et changée pour préserver l'intégrité du reste de l'installation.

De plus, on décrit un procédé amélioré de démontage d'une cartouche d'injection, en particulier une cartouche d'injection 1 telle que décrite précédemment. Le procédé comprend des étapes de :
- de préférence, désassembler les structures de montage 21, 22 de la source 2 et du contenant 4,
- de préférence, retirer les structures de maintien 7, 8 des structures de montage 21, 22,
- désassembler les deux structures de maintien 7, 8 par déclipsage ou par rotation de désassemblage de baïonnette.

Ce procédé permet en particulier d'avoir accès au moyen anti-reflux 5 par exemple pour le changer. En pratique, de préférence, en cas d'usure du moyen anti-reflux, la cartouche entière peut être retirée de la canalisation 4 et le moyen anti-reflux 5 est ensuite changé. Avantageusement, cela permet à un opérateur de ne pas avoir des jets de liquide correcteur sur les mains ni dans les yeux.

Avantageusement, les méthodes décrites comprennent des étapes rapides de montage et/ou de démontage des structures de maintien 7, 8 en raison des moyens d'attache 17, 18 réversibles par clipsage et/ou par baïonnette.

On décrit aussi un procédé d'injection d'un liquide dans un deuxième liquide en particulier dans une canalisation, au moyen d'un diffuseur 8 comprenant un fond axial 15 et au moins une ouverture latérale 16.

## Revendications

1. Cartouche d'injection (1) configurée pour être disposée en aval d'une source (2) comprenant un premier liquide, et pour déboucher dans un deuxième liquide, la cartouche comprenant :
- un moyen anti-reflux (5) configuré pour bloquer un déplacement de liquide vers la source (2) ;
- au moins une structure de maintien (7, 8) configurée pour maintenir le moyen anti-reflux (5) ;
- ladite au moins une structure de maintien (7, 8) comprenant des moyens d'attache pour fixer le moyen anti-reflux ;
- et la cartouche formant un ensemble amovible ;
**caractérisé en ce qu'**elle comprend deux structures de maintien (7, 8) qui comprennent des moyens d'attache par clipsage (17) et/ou par baïonnette (18) configurés pour fixer lesdites structures de maintien (7, 8) l'une sur l'autre de part et d'autre du moyen anti-reflux (5).

2. Cartouche d'injection (1) selon la revendication précédente, dans laquelle les moyens d'attache par clipsage (17) et/ou par baïonnette (18) comprennent au moins un doigt (17a) sur une structure de maintien (8) et au moins une extrémité de réception (17b) sur l'autre structure de maintien (7).

3. Cartouche d'injection (1) selon l'une des revendications précédentes, dans laquelle les deux structures de maintien (7, 8) comprennent un premier mécanisme de détrompage (19, 20) par coopération de forme.

4. Cartouche d'injection (1) selon la revendication précédente, dans laquelle le mécanisme de détrompage comprend au moins une rainure (19) sur une structure de maintien (7) coopérant avec un relief (20, 17b) correspondant de l'autre structure de maintien (8).

5. Cartouche d'injection (1) selon l'une des revendications précédentes, comprenant un diffuseur (8a) pouvant baigner dans le deuxième liquide, le diffuseur comprenant un fond axial (15) et au moins une ouverture latérale (16).

6. Cartouche d'injection (1) selon la revendication précédente, dans laquelle ladite ouverture latérale (16) représente 40 à 60% de la surface latérale du diffuseur (8a).

7. Cartouche d'injection (1) selon l'une des revendications précédentes, dans laquelle le moyen anti-reflux (5) comprend au moins une valve anti-reflux (5a) ou au moins un élément d'obturation (5b) associé à un moyen de rappel (5c).

8. Appareillage de traitement de liquide (25) comprenant une cellule de traitement (3), **caractérisé en ce qu'**il comprend en outre une cartouche d'injection (1) selon l'une des revendications précédentes associée à une source (2) de liquide à injecter

9. Appareillage de traitement de liquide (25) selon la revendication précédente, dans laquelle les structures de maintien (7, 8) de la cartouche d'injection (1) sont logées dans deux structures de montage (21, 22) vissables l'une sur l'autre.

10. Appareillage de traitement de liquide (25) selon la revendication précédente, dans laquelle la structure de maintien amont (7) comprend une embouchure (12) conique ou tronconique sur laquelle un tuyau (28) peut être connecté, de sorte que le vissage des structures de montage (21, 22) entraine le serrage du tuyau (28) sur l'embouchure (12) conique ou tronconique.

11. Appareillage de traitement de liquide (25) selon la revendication 9 ou 10, dans laquelle au moins une des structures de montage (21, 22) comprennent un deuxième mécanisme de détrompage (23, 24) par coopération de forme.

12. Appareillage de traitement de liquide (25) selon l'une des revendications 9 à 11, **caractérisée en ce que** la cartouche d'injection (1) est configurée pour être coulissée entre des structures de montage (21, 22) formant un dispositif de raccordement.

## Patentansprüche

1. Injektionskartusche (1), die zum Angeordnetwerden stromabwärts einer Quelle (2), umfassend eine erste Flüssigkeit, und zum Münden in einer zweiten Flüssigkeit konfiguriert ist, die Kartusche umfassend:
- ein Rückflussverhinderungsmittel (5), das zum Blockieren einer Bewegung von Flüssigkeit in Richtung der Quelle (2) konfiguriert ist;
- mindestens eine Haltestruktur (7, 8), die zum Halten des Rückflussverhinderungsmittels (5) konfiguriert ist;
- die mindestens eine Haltestruktur (7, 8) umfassend Befestigungsmittel zum Fixieren des Rückflussverhinderungsmittels;
- und wobei die Kartusche eine abnehmbare Anordnung ausbildet;
**dadurch gekennzeichnet, dass** sie zwei Haltestrukturen (7, 8) umfasst, die Mittel zum Befestigen durch Einklipsen (17) und/oder durch ein Bajonett (18) umfassen, die zum Fixieren der Haltestrukturen (7, 8) aneinander auf beiden Seiten des Rückflussverhinderungsmittels (5) konfiguriert sind.

2. Injektionskartusche (1) nach dem vorstehenden Anspruch, wobei die Mittel zum Befestigen durch Einklipsen (17) und/oder durch das Bajonett (18) mindestens einen Finger (17a) an einer Haltestruktur (8) und mindestens ein Aufnahmeende (17b) an der anderen Haltestruktur (7) umfassen.

3. Injektionskartusche (1) nach einem der vorstehenden Ansprüche, wobei die zwei Haltestrukturen (7, 8) einen ersten Mechanismus (19, 20) für eine Verwechslungssicherung durch formschlüssiges Zusammenwirken umfassen.

4. Injektionskartusche (1) nach dem vorstehenden Anspruch, wobei der Verwechslungssicherungsmechanismus mindestens eine Nut (19) an einer Haltestruktur (7) umfasst, die mit einem Relief (20, 17b) zusammenwirkt, das der anderen Haltestruktur (8) entspricht.

5. Injektionskartusche (1) nach einem der vorstehenden Ansprüche, umfassend einen Diffusor (8a), der in der zweiten Flüssigkeit baden kann, der Diffusor umfassend einen axialen Boden (15) und mindestens eine seitliche Öffnung (16).

6. Injektionskartusche (1) nach dem vorstehenden Anspruch, wobei die seitliche Öffnung (16) 40 bis 60 % der seitlichen Oberfläche des Diffusors (8a) darstellt.

7. Injektionskartusche (1) nach einem der vorstehenden Ansprüche, wobei das Rückflussverhinderungsmittel (5) mindestens ein Rückflussverhinderungsventil (5a) oder mindestens ein Verschlusselement (5b) umfasst, das mit einem Rückstellungsmittel (5c) verknüpft ist.

8. Flüssigkeitsbehandlungsvorrichtung (25), umfassend eine Behandlungszelle (3),
**dadurch gekennzeichnet, dass** sie ferner eine Injektionskartusche (1) nach einem der vorstehenden Ansprüche umfasst, die mit einer Quelle (2) von zu injizierender Flüssigkeit verknüpft ist.

9. Flüssigkeitsbehandlungsvorrichtung (25) nach dem vorstehenden Anspruch, wobei die Haltestrukturen (7, 8) der Injektionskartusche (1) in zwei aneinanderschraubbaren Montagestrukturen (21, 22) untergebracht sind.

10. Flüssigkeitsbehandlungsvorrichtung (25) nach dem vorstehenden Anspruch, wobei die stromaufwärtige Haltestruktur (7) eine konische oder kegelstumpfförmige Einmündung (12) umfasst, an der das Rohr (28) so verbunden werden kann, dass das Verschrauben der Montagestrukturen (21, 22) das Festziehen des Rohres (28) an der konischen oder kegelstumpfförmigen Einmündung (12) bewirkt.

11. Flüssigkeitsbehandlungsvorrichtung (25) nach Anspruch 9 oder 10, wobei mindestens eine der Montagestrukturen (21, 22) einen zweiten Mechanismus (23, 24) für die Verwechslungssicherung durch formschlüssiges Zusammenwirken umfasst.

12. Flüssigkeitsbehandlungsvorrichtung (25) nach einem der Ansprüche 9 bis 11, **dadurch gekennzeichnet, dass** die Injektionskartusche (1) zum Geschobenwerden zwischen Montagestrukturen (21, 22) konfiguriert ist, die eine Kopplungseinrichtung ausbilden.

## Claims

1. Injection cartridge (1) designed to be arranged downstream of a source (2) comprising a first liquid, and to be in communication with a second liquid, the cartridge comprising:
- non-return means (5) designed to block liquid movement toward the source (2); and
- at least one holding structure (7, 8) designed to hold the non-return means (5),
- said at least one holding structure (7, 8) comprising attachment means for fastening the non-return means,
- and the cartridge forming a removable assembly,
**characterized in that** said cartridge comprises two holding structures (7, 8) which comprise snap-fitting attachment means (17) and/or bayonet attachment means (18) designed to fasten said holding structures (7, 8) together on either side of the non-return means (5).

2. Injection cartridge (1) according to the preceding claim, wherein the snap-fitting attachment means (17) and/or bayonet attachment means (18) comprise at least one finger (17a) on one holding structure (8) and at least one receiving end (17b) on the other holding structure (7).

3. Injection cartridge (1) according to either of the preceding claims, wherein the two holding structures (7, 8) comprise a first form-fitting foolproofing mechanism (19, 20).

4. Injection cartridge (1) according to the preceding claim, wherein the foolproofing mechanism comprises at least one groove (19) in a holding structure (7), which groove engages with a corresponding raised portion (20, 17b) of the other holding structure (8).

5. Injection cartridge (1) according to any of the preceding claims, comprising a diffuser (8a) capable of being immersed in the second liquid, the diffuser comprising an axial base (15) and at least one lateral opening (16).

6. Injection cartridge (1) according to the preceding claim, wherein said lateral opening (16) represents 40 to 60% of the lateral surface of the diffuser (8a).

7. Injection cartridge (1) according to any of the preceding claims, wherein the non-return means (5) comprises at least one non-return valve (5a) or at least one closure element (5b) associated with a return means (5c).

8. Liquid treatment apparatus (25) comprising a treatment cell (3), **characterized in that** it further comprises an injection cartridge (1) according to any of the preceding claims that is associated with a source (2) of liquid to be injected.

9. Liquid treatment apparatus (25) according to the preceding claim, wherein the holding structures (7, B) of the injection cartridge (1) are housed in two assembly structures (21, 22) that can be screwed together.

10. Liquid treatment apparatus (25) according to the preceding claim, wherein the upstream support structure (7) comprises a conical or frustro-conical mouth (12) to which a tube (28) can be connected, so that the screwing together of the assembly structures (21, 22) causes the tube (28) to be clamped on the conical or frustro-conical mouth (12).

11. Liquid treatment apparatus (25) according to either claim 9 or 10, wherein at least one of the assembly structures (21, 22) comprises a second form-fitting foolproofing mechanism (23, 24).

12. Liquid treatment apparatus (25) according to any of claims 9 to 11, **characterized in that** the injection cartridge (1) is designed to be slid between assembly structures (21, 22) forming a connection device.
